# DEMANDE DE BREVET EUROPEEN

(11) **EP 3 315 391 A1**
(43) Date de publication de la demande: **02.05.2018**
(21) Numéro de dépôt: 16306405.8
(22) Date de dépôt: 26.10.2016
(51) Int. Cl.: B62H 3/02, B62H 3/04, B62H 5/00

(54) **ANTIVOL POUR CYCLE**

(71) Demandeur: Gasparini, Michel, 73130 Saint Avre (FR)
(72) Inventeur: Gasparini, Michel, 73130 Saint Avre (FR)
(74) Mandataire: Talbot, Alexandre

(57) **Abrégé**

L'antivol pour cycle comporte des premiers et deuxième éléments en saillie (1a, 1b) configurés pour autoriser l'introduction d'une première roue (2a) du cycle entre les premiers et deuxième éléments en saillie (1a, 1b) selon une première direction (X) et pour bloquer le déplacement de la première roue (2a) selon une deuxième direction (Y) perpendiculaire à la première direction (X). L'antivol comporte également une butée de blocage longitudinal (3) disposée de sorte que lors de l'introduction de la première roue (2a) du cycle entre les premier et deuxième éléments en saillie (1a, 1 b), la première roue (2a) vienne en appuie contre la butée de blocage longitudinal (3). Un moyen de blocage vertical (4) est monté mobile. Le moyen de blocage vertical (4) est agencé de manière à venir en contact avec une selle (5) et/ou un guidon (6) du cycle et est configuré pour bloquer le déplacement de la selle (5) et/ou du guidon (6) selon la deuxième direction (Y)

## Description

### Domaine technique de l'invention

L'invention est relative à un antivol pour cycle.

L'invention est également relative à un procédé d'utilisation d'un antivol pour cycle.

### État de la technique

Le vélo est un moyen de locomotion particulièrement pratique et efficace. Cependant, un des freins à l'utilisation massive du vélo pour les déplacements quotidiens est le vol.

La majorité des utilisateurs de vélo possède un antivol mobile ou antivol portatif qui est, par exemple, une chaine ou un antivol en U. Cet antivol permet de fixer le vélo à un point fixe, par exemple un mur, un poteau, ou le sol. De cette manière, il est impossible au voleur de s'emparer du vélo à moins de casser l'antivol avec le risque de détériorer le vélo.

En plus du vol de vélo, il existe également le vol des composants du vélo, par exemple, les roues ou la selle. De manière courante, la selle et les roues avant et arrière sont subtilisées lorsque le cycle est en stationnement. Cela entraine des coûts supplémentaires pour le cycliste afin de remplacer les produits subtilisés ou pour trouver des solutions empêchant le vol des accessoires.

Afin de remédier en partie à ces désagréments, l'antivol portatif est agencé de manière à sécuriser le cadre et souvent une des roues du vélo. Un autre antivol peut être utilisé pour fixer la selle au cadre et pour empêcher de s'emparer de la roue restante. La multiplication des antivols se traduit par un alourdissement du vélo ou du cycliste et par une gestion compliquée des différentes clés utilisées pour sécuriser tous les accessoires et pour placer des différents antivols sur le cadre.

Dans ce contexte, il apparaît préférable d'utiliser un antivol de grande dimension afin de pouvoir emprisonner le cadre avec l'une des roues et de fixer l'ensemble à un élément fixe de la chaussée. Cependant, plus l'antivol est important et plus son poids est conséquent.

De manière classique, il est connu de fixer son vélo à une paire d'arceaux qui maintiennent une des roues du cycle. Généralement, plusieurs couples d'arceaux sont généralement utilisés afin de stationner plusieurs vélos. Une des roues est montée entre les deux arceaux ce qui permet de maintenir le vélo en position verticale. Le cadre du vélo ou une roue est solidarisé à l'un des arceaux par un antivol portatif de manière à éviter le vol. Si l'antivol est de grande taille, il est possible de solidariser le cadre. Si l'antivol est plus petit, seule la roue est solidarisée. Cette solution ne permet pas de prévenir le vol de l'autre roue, ni le vol des équipements.

Il est également proposé des containers de stockage également appelés « bike locker » en langue anglaise. Le cycliste place son vélo dans un coffre et referme le coffre. Cette solution est particulièrement efficace car le voleur n'a pas accès au vélo. Cependant, une telle solution est difficilement utilisable car chaque coffre représente un volume conséquent. Cette solution ne peut pas être utilisée dans les villes et plus généralement dans les zones où la place disponible est comptée, c'est-à-dire dans tous les lieux à forte densité de population où le vélo représente un véritable avantage pour se déplacer.

Il est également proposé un support à partir duquel s'étend un élément filaire qui est généralement un câble en acier muni d'une boucle. Le support comporte également un arceau. Le cadre du vélo est alors fixé à l'arceau au moyen de l'antivol portatif et le câble est utilisé pour solidariser une des roues en fixant la boucle dans l'antivol portatif. Sous réserve que le cycliste possède un antivol portatif suffisamment grand, il peut être en mesure de solidariser le cadre et les deux roues. Cependant, cette solution ne peut être procurée que pour de très rares utilisateurs.

Une solution intéressante est proposée dans le document EP 1712456. Le dispositif antivol à vélo comporte un support qui est fixé au sol. Le support possède une portion coudée de manière à bloquer la roue arrière et empêcher un déplacement en marche arrière du vélo. La portion coudée empêche également un déplacement latéral du vélo. Le support comporte une coiffe à l'intérieure de laquelle la selle du vélo vient s'introduire. Il apparait que cette solution est intéressante mais difficilement industrialisable et utilisable au quotidien.

### Objet de l'invention

L'invention a comme objet de fournir un antivol pour cycle qui permet de mieux lutter contre le vol du vélo et de ces principaux constituants, à savoir les roues avant et arrière ainsi que la selle.

L'antivol pour cycle comporte :
- au moins des premiers et deuxième éléments en saillie configurés pour autoriser l'introduction d'une première roue du cycle entre les premiers et deuxième éléments en saillie selon une première direction et pour bloquer le déplacement de la première roue selon une deuxième direction perpendiculaire à la première direction,
- un moyen de blocage vertical monté mobile, le moyen de blocage vertical étant agencé de manière à venir en contact avec une selle et/ou un guidon du cycle et configuré pour bloquer le déplacement de la selle et/ou du guidon selon la deuxième direction.

Dans un développement, l'antivol comporte un élément filaire connecté au moyen de blocage vertical et agencé de manière à solidariser le cycle avec le moyen de blocage vertical.

Dans un mode de réalisation particulier, l'antivol comporte un point de fixation distinct du moyen de blocage vertical, l'élément filaire étant configuré pour relier le moyen de blocage vertical et le point de fixation.

Avantageusement, l'antivol comporte une butée de blocage longitudinal disposée de sorte que lors de l'introduction de la première roue du cycle entre les premier et deuxième éléments en saillie, la première roue vienne en appuie contre la butée de blocage longitudinal.

De manière préférentielle, le point de fixation et la butée de blocage sont disposés selon la première direction de manière à ce que l'élément filaire passant dans le point de fixation, il forme une deuxième butée de blocage longitudinal pour le cycle.

Dans un autre développement, le moyen de blocage vertical est monté rotatif autour d'un axe horizontal.

Il est également avantageux de prévoir que le moyen de blocage vertical soit monté sur la butée de blocage longitudinal et que le moyen de blocage vertical se déplace dans un plan perpendiculaire à la deuxième direction. Préférentiellement, le moyen de blocage vertical comporte un moyen de blocage de la selle configuré pour bloquer un déplacement de la selle selon la deuxième direction.

Dans un mode de réalisation avantageux, le moyen de blocage de la selle est configuré pour bloquer un déplacement de la selle selon la première direction.

Dans un autre mode de réalisation, l'antivol comporte un bras mobile et télescopique monté sur le moyen de blocage vertical et agencé pour venir en contact du cadre du cycle entre un boitier de pédalier et un tube supérieur.

L'invention a également pour objet un procédé d'utilisation d'un antivol qui permette de réduire les risques de vol sur certains composants du vélo et/ou sur des accessoires du vélo.

Le procédé est remarquable en ce qui comporte les étapes suivantes :
- fournir un antivol selon l'un des modes de réalisation précédents,
- introduire une première roue d'un cycle entre les premier et deuxièmes éléments en saillie de manière à venir en butée contre la butée de blocage longitudinal,
- déplacer le moyen de blocage vertical de manière à empêcher de soulever le cycle au-delà d'une valeur seuil,
- solidariser le cycle avec le moyen de blocage vertical,
- bloquer le moyen de blocage vertical.

Dans un mode de réalisation avantageux, un élément filaire est fixé au moyen de blocage vertical et un point de fixation. Il est avantageux de prévoir que l'élément filaire passe à travers le point de fixation pour bloquer le moyen de blocage vertical.

De manière particulièrement avantageuse, l'élément filaire passe à travers le cadre du cycle et/ou une roue du cycle.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, de côté, un premier mode de réalisation d'un antivol à vélo,

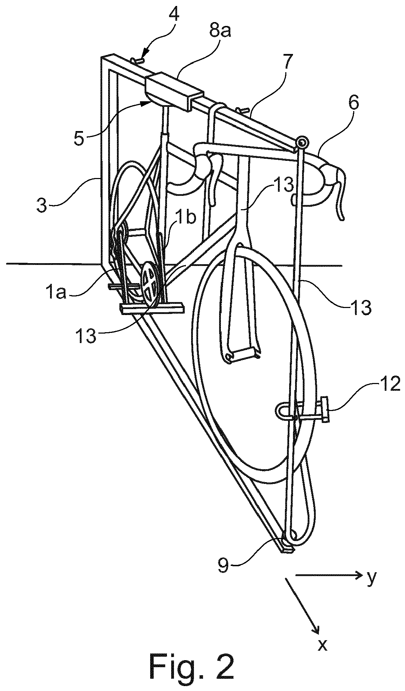

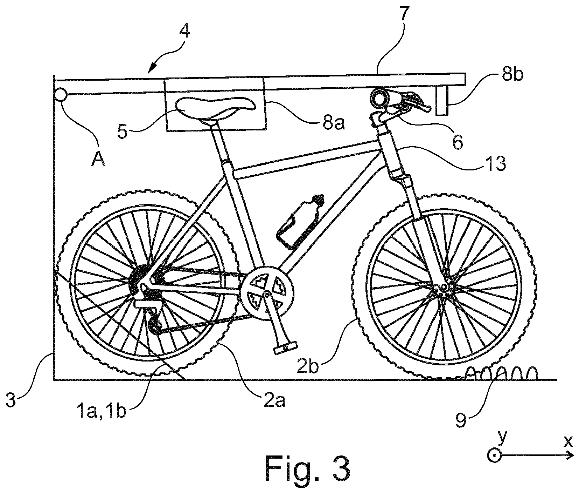

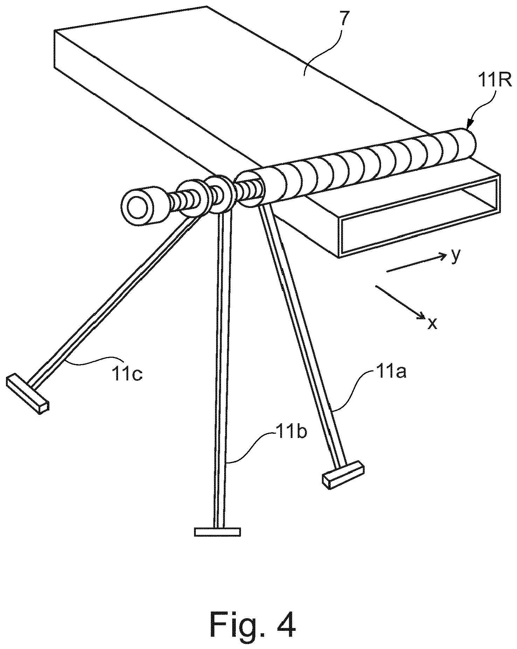

- les figures 2, 3 et 4, représentent de manière schématique, en vue de dessus, trois variantes de réalisation d'un antivol à vélo.

### Description détaillée

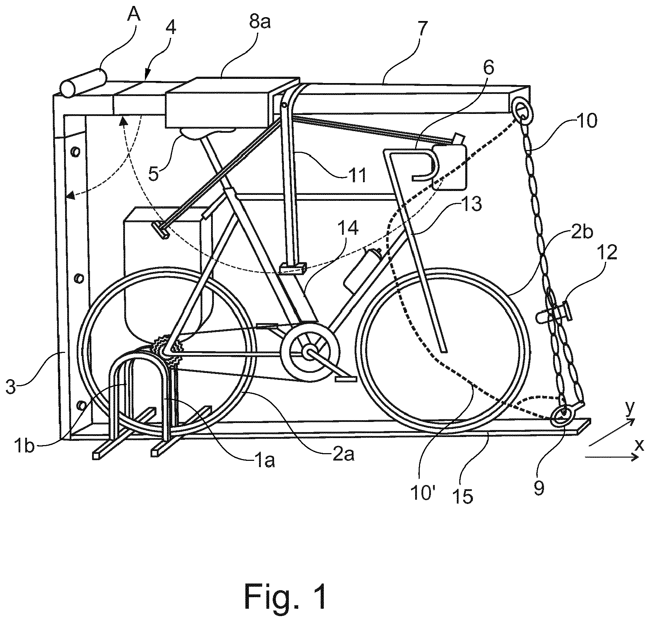

Comme illustré à la figure 1, l'antivol pour cycle possède des moyens de blocage inférieurs qui sont configurés pour coopérer avec une roue d'un cycle et pour empêcher un déplacement selon une direction transversale. La direction longitudinale correspond à l'axe longitudinal du cycle, la direction transversale correspond à une direction perpendiculaire à l'axe longitudinal contenue dans un plan horizontal. L'axe longitudinal est l'axe qui relie les deux axes de rotation des roues du cycle.

De manière avantageuse, les moyens de blocage inférieurs comportent des premier et deuxième éléments en saillie 1a et 1b qui sont disposés à distance l'un de l'autre pour autoriser l'installation d'une roue du cycle et pour empêcher un déplacement de la roue du cycle selon la direction latérale. Dans un mode de réalisation préférentiel, les premier et deuxième éléments en saillie 1a et 1b sont agencés de manière à autoriser l'introduction d'une première roue 2a du cycle selon une première direction X qui est une direction de déplacement longitudinal et qui correspond également à l'axe longitudinal du cycle.

Une fois la première roue 2a installée entre les premier et deuxième éléments en saillie 1a et 1b, cette dernière ne peut plus se déplacer selon une deuxième direction Y qui est perpendiculaire à la première direction X. La deuxième direction Y est une direction transversale et correspond à l'axe de rotation de la première roue 2a.

Les premier et deuxième éléments en saillie 1a et 1 b sont par exemple des arceaux, mais il est également possible d'utiliser un ou plusieurs plots ou une combinaison de ces deux modes de réalisation. Il est particulièrement avantageux de prévoir que les éléments 1a et 1 b dépassent de la surface de support de la roue du cycle d'une hauteur de 20cm.

Dans un mode de réalisation particulier, les moyens de blocage inférieurs sont également configurés pour bloquer la roue du cycle selon la direction longitudinal X. Dans une première configuration, les moyens de blocage inférieurs sont configurés pour bloquer la roue du cycle selon trois directions, deux directions opposées selon l'axe latéral Y et une direction selon l'axe longitudinal X. Dans un mode de réalisation spécifique, les éléments 1a et 1 b sont configurés pour bloquer l'axe de rotation de la roue et empêcher son déplacement selon l'axe longitudinal au-delà d'une valeur seuil.

Dans une alternative de réalisation, l'antivol comporte avantageusement une butée de blocage 3 longitudinal qui est distincte des moyens de blocage inférieurs. Afin de fixer la position du cycle selon l'axe longitudinal X, La butée de blocage 3 est agencée pour que la première roue 2a vienne contre la butée 3 et qu'elle se trouve entre les premier et deuxième éléments en saillie 1a et 1b. De cette manière, la première roue 2a ne peut pas se déplacer selon la deuxième direction Y et elle se trouve bloquée dans un sens selon la première direction X.

De manière avantageuse, la butée 3 peut être formée par un plot, un poteau, un mur ou un arceau.

De cette manière, il est difficile d'accéder à la première roue 2a pour la voler.

De manière avantageuse, la butée 3 et/ou les premier et deuxième éléments en saillie 1a et 1 b sont des éléments fixes les uns par rapport aux autres ce qui permet de faciliter la réalisation de l'antivol. Cela permet également de faciliter l'utilisation de l'antivol en bloquant une extrémité du cycle. Dans un mode de réalisation particulier, la butée 3 est distincte des premier et deuxième éléments en saillie 1a et 1b afin de faciliter l'installation de l'antivol et sa réalisation. Cependant, il est également possible de prévoir que la butée 3 et les premier et deuxième éléments en saillie 1a et 1b font partie d'un élément monobloc.

Dans un mode de réalisation particulier, l'élément de blocage inférieur est fixé au sol, par exemple scellé au sol ou fixé par des vis. Il peut en être de même pour la butée 3. En alternative, l'élément de blocage inférieur est réalisé dans le sol, par exemple gravé dans le sol ou réalisé en béton. Il peut également en être de même pour la butée 3.

L'antivol comporte également un moyen de blocage vertical 4 qui est configuré pour empêcher un déplacement vertical du cycle. Le moyen de blocage vertical 4 est monté mobile afin de s'adapter aux différentes tailles de vélos. Le moyen de blocage vertical 4 est configuré pour venir en contact avec la selle 5 et/ou le guidon 6 du cycle. Le moyen de blocage vertical 4 est configuré pour empêcher le cycle de se soulever du sol au-delà d'une valeur seuil, par exemple 1cm. Une fois le cycle installé, le moyen de blocage vertical 4 empêche un déplacement vertical du cycle.

De manière avantageuse, le moyen de blocage vertical 4 est configuré pour venir en contact direct avec la selle 5 et/ou le guidon 6 du cycle et ainsi empêcher que le vélo ne quitte le sol. De cette manière, il est impossible pour un voleur de soulever le vélo afin de pouvoir subtiliser une roue.

Le moyen de blocage vertical 4 est monté mobile de manière à pouvoir s'adapter à la hauteur du cycle et notamment à l'extension de la selle. Le moyen de blocage vertical 4 peut être monté mobile en translation selon une direction verticale. En alternative ou en combinaison, le moyen de blocage vertical 4 peut être monté mobile en rotation selon un plan horizontal ou sensiblement horizontal.

De manière avantageuse, le moyen de blocage vertical 4 comporte une barre de blocage 7 qui vient en contact avec la selle 5 et/ou le guidon 6 ou qui se trouve à proximité de la selle 5 et/ou du guidon 6 pour empêcher de soulever le cycle.

Différents modes de réalisation sont envisageables pour former le moyen de blocage vertical 4. Dans un premier cas de figure, le moyen de blocage vertical 4 comporte une barre de blocage 7 qui est montée mobile en translation verticalement. Ainsi, la hauteur de la barre de blocage 7 est adaptée à la hauteur de la selle.

Dans un mode de réalisation alternatif, le moyen de blocage vertical 4 est monté rotatif et de préférence au moyen d'un axe de rotation A qui est horizontal. Ce mode de réalisation est particulièrement avantageux car il permet de venir facilement en contact de la selle 5 et/ou du guidon 6 selon les dimensions du cycle. Ce mode de réalisation avec un axe de rotation A est particulièrement avantageux car il permet de facilement régler la position du moyen de blocage vertical 4 pour s'adapter à la hauteur du vélo tout en assurant une bonne tenue mécanique du moyen de blocage vertical 4 pour assurer l'intégrité mécanique de l'antivol.

De manière avantageuse, l'antivol possède une position de rangement dans laquelle, le moyen de blocage vertical 4 vient se rabattre verticalement afin de limiter l'encombrement de l'antivol.

Pour faciliter l'insertion du vélo dans l'antivol, il est préférable de tourner le moyen de blocage vers le haut, c'est-à-dire de soulever l'extrémité distale par rapport à l'axe de rotation A. Le moyen de blocage peut être tourné afin de dépasser l'axe horizontal. Par exemple, il est placé à environ 45° au-delà de l'axe horizontal. Il est donc avantageux de prévoir que l'axe de rotation 1 soit configuré pour pouvoir tourner sur une plage angulaire au moins égale à 135°. Il est également avantageux de prévoir que l'axe de rotation soit configuré pour que ce dernier bloque le moyen de blocage vertical 4 lorsqu'il atteint la valeur maximale autorisée vers le haut. De cette manière, l'utilisateur peut installer son vélo facilement sans manipuler le moyen de blocage vertical 4 en même temps.

Dans un mode de réalisation particulièrement avantageux, le moyen de blocage vertical 4 est monté en rotation sur la butée de blocage 3. Dans ce cas de figure, il est avantageux de prévoir que l'axe de rotation est parallèle à l'axe de rotation de la première roue, c'est-à-dire que la barre de blocage se déplace selon un plan contenant l'axe longitudinal. De préférence, la rotation est comprise dans un plan perpendiculaire à la deuxième direction Y.

Dans un mode de réalisation avantageux, le moyen de blocage vertical 4 est manchonné sur la butée de blocage 3 par des moyens de manchonnage. De manière avantageuse, le moyen de blocage vertical 4 comporte un orifice permettant l'introduction d'une protubérance de la butée de blocage. En alternative, le moyen de blocage vertical 4 comporte une protubérance qui s'introduit dans un orifice de la butée de blocage 3. De manière avantageuse la protubérance et l'orifice présentent des formes complémentaire afin d'accroitre la résistance mécanique de l'ensemble. Les moyens de manchonnage sont configurés pour autoriser la fixation de la butée de blocage 3 avec le moyen de blocage vertical 4, par exemple par un ou plusieurs rivets, des vis ou d'autres éléments de fixation. Il est également possible de coller ou souder ces deux éléments mais le démontage en cas de défaillance ou dégradation est plus difficile.

En alternative, le moyen de blocage 4 est monté mobile en rotation sur un mur, un poteau ou un autre élément distinct de l'antivol.

Le moyen de blocage 4 est mobile ce qui permet de déplacer l'antivol d'une configuration d'insertion où le vélo n'est pas bloqué par le moyen de blocage 4 jusqu'à une configuration de blocage où le moyen de blocage est en contact avec le vélo pour le bloquer verticalement et transversalement.

Afin de limiter le déplacement du cycle, il est avantageux de prévoir des moyens de blocage 8a/8b de la selle et/ou du guidon selon la deuxième direction Y. Ces moyens de blocage 8a/8b de la selle et/ou du guidon sont avantageusement montés sur le moyen de blocage vertical 4 et encore plus avantageusement sur la barre de blocage 7.

Les moyens de blocage 8a/8b de la selle et/ou du guidon sont formés par un ou plusieurs éléments en saillie qui viennent bloquer le déplacement de la selle et/ou du guidon selon la deuxième direction Y. Par exemple, le moyen de blocage de selle est formé par une coiffe qui fait saille de la barre de blocage et qui est configurée pour entourer la selle du cycle au moyen de deux parois latérales selon la direction Y. De cette manière, la selle et/ou le guidon sont bloqués selon l'axe Y.

Ainsi, la selle 5 est emprisonnée dans la coiffe et elle ne peut s'échapper transversalement ce qui empêche de pencher le cycle pour essayer d'accéder à la selle 5 et/ou aux roues 2a/2b. En bloquant le guidon et/ou la selle, la partie supérieure du vélo est bloquée selon l'axe Y tout comme la partie inférieure. Le vélo est alors bloqué dans une position verticale ou sensiblement verticale. Ces éléments ne peuvent être volés.

Dans un mode de réalisation particulièrement avantageux, les moyens de blocages 8a/8b sont également configurés pour bloquer un déplacement du vélo selon l'axe longitudinal X. De manière avantageuse, les moyens de blocage 8a/8b sont configurés pour bloquer un déplacement du vélo dans la direction opposée à celle de son introduction dans l'antivol.

Dans un mode de réalisation particulièrement avantageux, le moyen de blocage vertical 4 comporte une barre de blocage 7 qui est montée télescopique. De cette manière, la longueur de la barre de blocage 7 peut s'adapter à la longueur du cycle. La barre de blocage présente préférentiellement une longueur variable selon l'axe longitudinal.

Dans un mode de réalisation particulier, les moyens de blocages 8a/8b sont disposés sur la partie mobile de la barre de blocage 7 selon l'axe longitudinal X. Cette configuration permet d'adapter la longueur de la barre de blocage 7 à la position de la selle et/ou du guidon ce qui facilite le blocage du vélo selon la direction longitudinal X.

Cette configuration permet de déplacer le moyen de blocage du guidon 8b selon la première direction X afin que ce dernier bloque le déplacement du cycle selon le deuxième sens.

Selon les modes de réalisation, les moyens de blocage de selle 8a sont montés fixe ou mobile par rapport au moyen de blocage vertical 4.

Dans un mode de réalisation particulier, le moyen de blocage vertical 4 est bloqué en position de blocage du vélo au moyen d'un élément filaire 10 qui coopère avec un point de fixation 9 qui est avantageusement fixé au sol. Dans un mode de réalisation avantageux, l'antivol comporte une platine 15 qui est fixée au sol afin de fixer tout ou partie de l'antivol avec le sol. De manière préférentielle, la platine 15 est fixée avec la butée 3 et/ou avec le point de fixation 9. De cette manière, il est beaucoup plus compliqué de voler le vélo car les deux extrémités de l'antivol sont en liaison avec le sol. Afin de limiter les mouvements du vélo, la platine 15 peut être réalisée au moyen d'une cornière dont la coupe représente un V afin de bloquer au moins partiellement les mouvements de la roue du cycle. En alternative, la platine peut être délimitée selon la direction Y par deux tasseaux qui sont agencés pour dépasser du sol et bloquer les mouvements de la roue selon la direction Y et mieux stabiliser le vélo durant la fermeture de l'antivol.

La platine faisant saillie par rapport au sol, il est avantageux de limiter son encombrement vertical à moins de 3 cm. A titre d'exemple, les tasseaux ont une longueur égale à 170cm et partent de la butée 3 pour se terminer par le point de fixation 9. La distance entre les deux tasseaux selon la direction Y est inférieure ou égale à 7cm afin de faire entrer tous les pneus standard. Les tasseaux ont avantageusement une section carrée. En alternative, les deux tasseaux peuvent se trouver dans le prolongement des éléments 1a et 1 b.

Dans cette configuration, il est préférable de placer l'élément filaire 10 à une extrémité du moyen de blocage vertical 4. Pour bloquer le moyen de blocage vertical 4, il suffit de faire passer l'élément filaire 10 dans le point de fixation 9 et de tendre l'élément filaire 10. De préférence, lorsque la barre de blocage 7 est montée en rotation, il est avantageux de fixer l'élément filaire 10 sur l'extrémité opposée à l'axe de rotation. Dans un mode de réalisation préférentiel, le point de fixation est décalé de l'axe longitudinal passant par les deux roues du cycle ce qui permet une utilisation facilitée de l'antivol car le point de fixation est plus facilement accessible. En alternative, l'élément filaire 10 peut être fixé au point de fixation et il coopère avec le moyen de blocage vertical pour bloquer ce dernier dans sa position de blocage. Il est encore possible de combiner un premier élément filaire fixé au moyen de blocage 4 et un deuxième élément filaire fixé au point de fixation 9. L'élément filaire 10 étant tendu, il n'est pas possible de déplacer le moyen de blocage vertical 4 qui recouvre tout le cycle et éventuellement de modifier la longueur du moyen de blocage 4. L'élément filaire 10 relie le sol et le moyen de blocage vertical 4 ce qui permet de former avantageusement une deuxième butée de blocage longitudinal qui empêche un déplacement du cycle selon la première direction X en passant entre les deux extrémités opposés du guidon selon la deuxième direction Y. Dans cette configuration, le cycle est contraint de chaque côté selon la première direction X et il est également contraint selon la deuxième direction Y.

L'élément filaire 10 peut être une chaine ou un câble en acier.

Dans le mode de réalisation illustré, l'élément filaire 10 relie le moyen de blocage vertical 4 avec le point de fixation de manière sensiblement rectiligne. Cependant, d'autres modes de blocage sont possibles en faisant passer l'élément filaire à l'intérieur du cadre du vélo et/ou des accessoires du vélo.

Afin de sécuriser encore plus le vélo, il est également possible de passer l'élément filaire 10 dans la roue 2a ou 2b qui est la plus proche du point de fixation 9 afin de solidariser le cycle à l'antivol. Ce mode de réalisation peut être utilisé avec une barre de blocage fixe, télescopique ou pliable. L'élément filaire 10 peut également être utilisé pour sécuriser le vélo en passant à l'intérieur du cadre. Ce mode de réalisation est représenté en pointillé sur la figure 1 avec l'élément filaire 10'. Pour soucis de clarté, l'élément filaire 10' est présenté non tendu.

Si la barre de blocage 7 est fixe, il peut être avantageux de prévoir que l'antivol comporte plusieurs points de fixation 9 disposés le long de la première direction X, c'est-à-dire selon l'axe longitudinal. Cette précaution permet d'adapter la position de l'élément filaire 10 à la longueur du cycle.

Afin d'empêcher un déplacement du cycle selon la première direction X, il est avantageux de prévoir que le moyen de blocage vertical 4 comporte un moyen de blocage de la selle 8a selon la première direction X. Le moyen de blocage vertical 4 comporte avantageusement une coiffe 8a qui vient recouvrir la selle 5 ce qui permet de contraindre ses déplacements selon la première direction X et selon la deuxième direction Y dans les deux sens.

L'utilisation d'un élément filaire 10 qui relie le moyen de blocage vertical 4 avec le point de fixation 9 est particulièrement avantageuse car il permet la fermeture de l'antivol au moyen d'un cadenas ou de l'antivol mobile 12 habituel de l'utilisateur. Les contraintes sur les dimensions de l'antivol sont supprimées car il suffit de connecter l'élément filaire 10 avec le point de fixation 9. Si l'élément filaire 10 est une chaine, il est possible de fermer l'antivol en fixant deux maillons de la chaine qui sont de part et d'autre du point de fixation 9. L'utilisation d'une chaine permet une plus grande liberté dans les dimensions de l'antivol portatif ou du cadenas utilisable. Si l'élément filaire est un câble métallique, le câble comporte une ou plusieurs boucles permettant de passer l'antivol portatif.

Le point de fixation 9 est, de préférence, un anneau ce qui permet d'utiliser un antivol portatif habituel. En alternative, il est possible d'utiliser un point de fixation mécanique qui coopère avec l'élément filaire 10 et qui permet de ne pas utiliser l'antivol portatif. Cependant cette solution est plus onéreuse.

Dans un mode de réalisation particulier, les premier et deuxième éléments en saillie 1a et 1b sont réalisés en métal ou en alliage métallique et préférentiellement en acier. En alternative, les premier et deuxième éléments en saillie 1a et 1b sont réalisés en béton.

Il est également avantageux de prévoir que la butée de blocage 3 longitudinal est réalisée en métal ou en alliage métallique. Cependant, il est encore possible d'envisager que la butée de blocage 3 est en béton. La butée de blocage 3 peut être formée par un mur, mais il est avantageux de former la butée par un poteau afin de réaliser un antivol qui peut être installé plus facilement dans diverses conditions.

Le moyen de blocage vertical 4 est avantageusement réalisé en métal ou en alliage métallique.

Le moyen de blocage vertical 4 peut se déplacer verticalement de manière à s'adapter aux dimensions du cycle.

De manière avantageuse, lorsque le moyen de blocage 4 est monté rotatif avec un axe de rotation horizontal, l'axe de rotation est disposé à une hauteur comprise entre 1m et 1,2m par rapport au sol. De cette manière, la rotation du moyen de blocage 4 s'adapte facilement aux différentes tailles de cycles.

Le moyen de blocage vertical 4 comporte avantageusement une barre de blocage 7 dont la longueur est comprise entre 1m et 1,4m. De manière préférentielle, la barre de blocage 7 est réalisée au moyen d'un premier élément et d'un deuxième élément. Le deuxième élément est monté coulissant par rapport au premier élément selon l'axe longitudinal. Ce montage à coulissement permet d'adapter la taille de l'antivol à la dimension du vélo. Dans un mode de réalisation particulier, le premier élément coulissant et le deuxième élément coulissant sont des éléments télescopiques. Le premier élément coulissant est fixé à l'axe de rotation A et le deuxième élément coulissant coulisse le long du premier élément télescopique. Le deuxième élément coulissant est séparé de l'axe de rotation A par le premier élément coulissant. Dans un mode de réalisation particulier, les premier et deuxième éléments coulissants sont montés télescopiques de sorte que dans la position de rangement de l'antivol, ce dernier occupe un volume réduit.

Il est avantageux de prévoir que le premier élément télescopique présente une longueur inférieure à la distance entre l'axe de rotation et le sol ce qui permet de faciliter le rangement de la barre de blocage 7 lorsque l'antivol n'est pas utilisé en le repliant contre le mur ou la butée 3.

Il est également avantageux de prévoir que la butée de blocage 3 longitudinal est formée par un élément dont la largeur est inférieure à la largeur des moyens de blocage 8a/8b de la selle et/ou du guidon selon la deuxième direction Y. De cette manière, lorsque la barre de blocage 7 est repliée, les moyens de blocage 8a/8b ne viennent pas contre la butée de blocage 3 ce qui permet d'avoir une position de rangement plus compacte de la barre de blocage 7. Le volume occupé par l'antivol est réduit et il peut être réduit encore plus dans sa position de rangement.

Afin de faciliter le rangement du moyen de blocage 4 par rapport à la butée de blocage 3, il est avantageux de placer l'axe de rotation A de manière décalée par rapport à la paroi de la butée de blocage. Il est particulièrement intéressant de placer l'axe de rotation A contre la paroi qui vient en contact avec la roue du cycle afin de diminuer l'encombrement de l'antivol lorsque le moyen de blocage 4 est rabattu. Cependant, il est également possible de prévoir que l'axe de rotation A se trouve en saillie, mais ce mode de réalisation peut être plus fragile dans le temps.

Dans un mode de réalisation particulièrement avantageux, le moyen de blocage 4 comporte un élément en saillie 11 qui est un élément modulaire agencé pour venir en appui contre le cadre 13 et plus particulièrement entre le boitier de pédalier et le tube supérieur du cycle. L'élément en saillie 11 est monté rotatif de manière à pourvoir venir en appui contre la cadre dans différents endroits du triangle formé dans le cadre du vélo. Le triangle est défini en partie par le tube supérieur. Cette configuration permet de s'adapter aux différentes tailles de cycles.

L'élément en saillie 11 est également configuré pour se bloquer lorsqu'il est sous contrainte. Ainsi, lors de la mise en place du moyen de blocage vertical, par exemple par rotation, l'élément en saillie 11 vient en butée contre un accessoire du cycle et il se bloque. L'élément en saillie est particulièrement adapté pour empêcher de voler la batterie 14 d'un cycle électrique car la batterie 14 est généralement disposée dans le triangle central du cycle.

L'élément en saillie 11 est par exemple un bras mobile et télescopique. En alternative ou en combinaison, l'élément en saillie est formé par une pluralité de tiges ayant des longueurs différentes et qui sont montées rotatives préférentiellement autour d'un axe de rotation parallèle ou sensiblement parallèle à l'axe A. Ces tiges de différentes longueurs permettent de venir en appui contre les accessoires installés dans le triangle interne du cadre afin d'empêcher le vol. de manière avantageuse, deux séries de tiges identiques ou différentes sont disposées de part et d'autre du moyen de blocage 4 afin de venir en vis-à-vis du vélo sur les deux côtés opposés du vélo. Cette configuration permet de mieux protéger les accessoires.

Il est encore possible de prévoir que l'élément en saillie 11 est formé par une pluralité de tiges qui viennent fermer partiellement ou totalement le triangle interne du cadre afin de restreindre l'accès à l'intérieur du cadre. En d'autres termes, les tiges sont agencées pour venir face à face de chaque côté du cadre et recouvrir au moins partiellement l'espace vide du triangle interne du cadre. Il est particulièrement avantageux de prévoir que le point d'attache se situe face au triangle afin de coopérer avec l'élément filaire 10 et bloquer l'élément en saillie lorsque l'élément filaire est bloqué.

L'antivol peut être configuré pour protéger un cycle ou une pluralité de cycles, par exemple au moins deux cycles. Les éléments décrits ci-dessus pour protéger un cycle sont multipliés afin de protéger plusieurs cycle.

De manière particulièrement avantageuse, les axes de rotation A des moyens de blocage verticaux sont reliés entre eux mécaniquement au moyen d'une barre de renfort qui est avantageusement une barre métallique afin de renforcer la solidité de l'antivol. La barre de renfort est avantageusement horizontale ou sensiblement horizontale. Il est également possible d'utiliser plusieurs barres de renfort.

## Revendications

1. Antivol pour cycle comportant :
- au moins des premiers et deuxième éléments en saillie (1a, 1b) configurés pour autoriser l'introduction d'une première roue (2a) du cycle entre les premiers et deuxième éléments en saillie (1a, 1b) selon une première direction (X) et pour bloquer le déplacement de la première roue (2a) selon une deuxième direction (Y) perpendiculaire à la première direction (X),
- un moyen de blocage vertical (4) monté mobile, le moyen de blocage vertical (4) étant agencé de manière à venir en contact avec une selle (5) et/ou un guidon (6) du cycle et configuré pour bloquer le déplacement de la selle (5) et/ou du guidon (6) selon la deuxième direction (Y).

2. Antivol selon la revendication 1, **caractérisé en ce qu'**il comporte un élément filaire (10) connecté au moyen de blocage vertical (4) et agencé de manière à solidariser le cycle avec le moyen de blocage vertical (4).

3. Antivol selon la revendication 2, **caractérisé en ce qu'**il comporte un point de fixation (9) distinct du moyen de blocage vertical (4), l'élément filaire (10) étant configuré pour relier le moyen de blocage vertical (4) et le point de fixation (9).

4. Antivol selon l'une quelconques des revendications précédentes, **caractérisé en ce qu'**il comporte une butée de blocage longitudinal (3) disposée de sorte que lors de l'introduction de la première roue (2a) du cycle entre les premier et deuxième éléments en saillie (1a, 1b), la première roue (2a) vienne en appuie contre la butée de blocage longitudinal (3),

5. Antivol selon les revendications 3 et 4, **caractérisé en ce que** le point de fixation (9) et la butée de blocage (3) sont disposés selon la première direction (X) de manière à ce que l'élément filaire (10) passant dans le point de fixation (9), il forme une deuxième butée de blocage longitudinal pour le cycle.

6. Antivol selon l'une quelconque des revendications précédentes, **caractérisé en ce que** le moyen de blocage vertical (4) est monté rotatif autour d'un axe horizontal.

7. Antivol selon la revendication précédente, **caractérisé en ce que** le moyen de blocage vertical (4) est monté sur la butée de blocage longitudinal (3) et que le moyen de blocage vertical (4) se déplace dans un plan perpendiculaire à la deuxième direction (Y).

8. Antivol selon l'une quelconque des revendications précédentes, **caractérisé en ce que** le moyen de blocage vertical (4) comporte un moyen de blocage de la selle (8a) configuré pour bloquer un déplacement de la selle (5) selon la deuxième direction (Y).

9. Antivol selon la revendication précédente, **caractérisé en ce que** le moyen de blocage de la selle (8a) est configuré pour bloquer un déplacement de la selle (5) selon la première direction (X).

10. Antivol selon l'une quelconque des revendications précédentes, **caractérisé en ce qu'**il comporte un bras (11) mobile et télescopique monté sur le moyen de blocage vertical (4) et agencé pour venir en contact du cadre du cycle entre un boitier de pédalier et un tube supérieur.

11. Procédé d'utilisation d'un antivol comportant :
- fournir un antivol selon l'une quelconque des revendications 1 à 10,
- introduire une première roue (2a) d'un cycle entre les premier et deuxièmes éléments en saillie (1a, 1b) de manière à venir en butée contre la butée de blocage longitudinal (3),
- déplacer le moyen de blocage vertical (4) de manière à empêcher de soulever le cycle au-delà d'une valeur seuil,
- solidariser le cycle avec le moyen de blocage vertical (4),
- bloquer le moyen de blocage vertical (4).

12. Procédé d'utilisation d'un antivol selon la revendication 11 comportant un élément filaire (10) fixé au moyen de blocage vertical (4) et un point de fixation (9), procédé dans lequel l'élément filaire (10) passe à travers le point de fixation (9) pour bloquer le moyen de blocage vertical (4).

13. Procédé d'utilisation d'un antivol selon la revendication 12 dans lequel, l'élément filaire (10) passe à travers le cadre du cycle et/ou une roue du cycle.
